# EUROPÄISCHE PATENTSCHRIFT

(11) **EP 3 242 917 B1**
(45) Veröffentlichungstag und Bekanntmachung des Hinweises auf die Patenterteilung: **31.03.2021**
(21) Anmeldenummer: 15805175.5
(22) Anmeldetag: 07.12.2015
(51) Int. Cl.: C09J 7/38, C09J 7/22, C09J 133/02, C09J 175/04, C08G 18/62, C08G 18/64, C08G 18/70, C08G 18/79, C08F 220/18

(54) **HAFTKLEBENDE SCHUTZFOLIE**
PROTECTIVE ADHESIVE FILM
PELLICULE DE PROTECTION AUTOADHÉSIVE

(30) Priorität: 08.01.2015 EP 15150404
(43) Veröffentlichungstag der Anmeldung: 15.11.2017
(73) Patentinhaber: BASF SE, 67056 Ludwigshafen am Rhein (DE)
(72) Erfinder: TONHAUSER, Christine, 67069 Ludwigshafen (DE); ARNOLD, Petra, 69488 Birkenau (DE); KERN, Holger, 74912 Kirchardt (DE); GROSS, Michael, 68165 Mannheim (DE)
(74) Vertreter: BASF IP Association
(86) Internationale Anmeldenummer: PCT/EP2015/078754
(87) Internationale Veröffentlichungsnummer: WO 2016/110367

(56) Entgegenhaltungen:
- EP-A1- 0 879 864
- WO-A1-00/04079
- WO-A1-2004/029171
- WO-A1-2007/125031
- WO-A1-2011/073041
- DE-A1- 19 540 997

## Beschreibung

Die Erfindung betrifft haftklebende Schutzfolien, gebildet aus einer Polymerfolie, welche mit einer vernetzten Haftklebstoffzusammensetzung beschichtet ist. Die Haftklebstoffzusammensetzung enthält ein Haftklebstoffpolymer, welches gebildet ist durch Emulsionspolymerisation in Gegenwart von verzuckerter Stärke aus bestimmten Monomeren. Die Haftklebstoffzusammensetzung enthält bestimmte Vernetzer, wobei die durch den Vernetzer bewirkte Vernetzungsreaktion bereits beendet ist, bevor die haftklebende Schutzfolie auf ein Substrat aufgeklebt wird.

Selbstklebende Schutzfolien sind Polymerfolien, die mit einem Haftklebstoff beschichtet sind und dazu dienen, vorübergehend auf ein Objekt aufgeklebt zu werden, um dessen Oberfläche zum Beispiel beim Transport des Objektes vor Kratzern zu schützen. Haftklebstoffe auf Basis von wässrigen Polymerdispersionen haben häufig Nachteile gegenüber Haftklebstoffen auf Basis von organischen Lösungsmitteln, wenn sie in Kontakt mit Wasser kommen. Ein Beispiel dafür ist eine relativ hohe Wasseraufnahme des Klebstofffilms, wodurch z.B. die Klebeeigenschaften beeinträchtigt werden oder wodurch es zu einem Weißanlaufen des Klebefilms kommen kann. Dies kann insbesondere bei der Verwendung von dispersionsbasierten Schutzfolienklebern im Außenbereich vorkommen. Das Weißanlaufen kann auftreten, wenn Wasser in den Klebefilm eindringt und eine Trübung des Klebefilms hervorruft. Dies ist optisch unerwünscht.

Das Weißanlaufverhalten kann mit der Wasseraufnahme des Klebefilms korrelieren.

Eine selbstklebende Schutzfolie mit einem Träger aus einer thermoplastischen Folie, die einseitig mit einer Polyacrylatselbstklebemasse in Form einer getrockneten Polymerdispersion beschichtet ist, wird in der WO 2011/073041 A1 beschrieben. Bevorzugt wird die Polymerdispersion durch eine Emulsionspolymerisation hergestellt. Dabei können Schutzkolloide, wie beispielsweise Stärke, zunächst zur Stabilisierung der Monomertröpfchen und nach erfolgter Polymerisation zur Stabilisierung der Polymerdispersion verwendet werden.

In der WO 97/17387 werden stärkehaltige Polymerdispersionen und ihre Verwendung als Kaschierklebstoff beschrieben. Haftklebstoffe oder Schutzfolien werden nicht beschrieben.

In der US 2002/0161102 werden Haftklebstoffzusammensetzungen beschrieben enthaltend eine synthetische Polymerdispersion sowie eine wässrige Dispersion einer abgebauten, derivatisierten Stärke. Die Polymerdispersion wird nicht in Gegenwart der Stärke hergestellt.

Aufgabe der vorliegenden Erfindung war es, haftklebende Schutzfolien zur Verfügung zu stellen, bei denen der Haftklebstoff auf wässriger Basis hergestellt ist, ein für Schutzfolien möglichst gut geeignetes Klebeprofil aufweist und eine möglichst geringe Wasseraufnahme des Klebefilms bei Kontakt mit Wasser zeigt. Zusätzlich ist es wünschenswert, dass die Klebefilme ein möglichst geringes Weißanlaufverhalten bei Kontakt mit Wasser zeigen.

Demgemäß wurde die nachfolgend näher erläuterte haftklebende Schutzfolie gefunden.

Gegenstand der Erfindung ist eine haftklebende Schutzfolie, gebildet aus einer Polymerfolie, welche mit einer vernetzten Haftklebstoffzusammensetzung beschichtet ist, wobei die Haftklebstoffzusammensetzung mindestens ein Haftklebstoffpolymer enthält, welches gebildet ist durch Emulsionspolymerisation aus
(i) mindestens 60 Gew.%, bezogen auf die Summe der Monomere, mindestens eines weichen Monomers, welches, wenn es als Homopolymer polymerisiert ist, eine Glasübergangstemperatur von weniger als 0°C aufweist,
(ii) 0,1 - 5 Gew.%, bezogen auf die Summe der Monomere, mindestens einer ethylenisch ungesättigten Säure oder mindestens eines ethylenisch ungesättigten Säureanhydrids,
(iii) optional weitere, von (i) und (ii) verschiedene Monomere,
wobei die Emulsionspolymerisation der Monomere in Gegenwart von mindestens einer verzuckerten Stärke erfolgt,
und wobei die Haftklebstoffzusammensetzung mindestens einen Vernetzer enthält, der ausgewählt ist aus Polyisocyanaten und Polyaziridinen und wobei die durch den Vernetzer bewirkte Vernetzungsreaktion beendet ist, ohne dass die haftklebende Schutzfolie auf ein Substrat aufgeklebt ist.

Das Gewichtsverhältnis von verzuckerter Stärke zu Vernetzer in der Dispersion beträgt vorzugsweise von 1:2 bis 100:1, oder von 2:1 bis 100:1, insbesondere von 3,5:1 bis 40:1 oder von 4:1 bis 20:1 oder von 4:1 bis 15:1 oder von 4:1 bis 12:1.

Die Gew.-%-Angaben beziehen sich jeweils auf die Summe aller bei der Polymerisation eingesetzten Monomere.

Gegenstand der Erfindung ist auch ein Verfahren zur Herstellung von Schutzfolien. Gegenstand der Erfindung ist auch eine Haftklebstoffzusammensetzung verwendbar in dem Verfahren in Form einer wässrigen Polymerdispersion, enthaltend mindestens ein dispergiertes Haftklebstoffpolymer, welches gebildet ist durch Emulsionspolymerisation aus
(i) mindestens 60 Gew.%, bezogen auf die Summe der Monomere, mindestens eines weichen Monomers, welches, wenn es als Homopolymer polymerisiert ist, eine Glasübergangstemperatur von weniger als 0°C aufweist,
(ii) 0,1 - 5 Gew.%, bezogen auf die Summe der Monomere, mindestens einer ethylenisch ungesättigten Säure oder mindestens eines ethylenisch ungesättigten Säureanhydrids,
(iii) optional weitere, von (i) und (ii) verschiedene Monomere,
wobei die Emulsionspolymerisation der Monomere in Gegenwart von mindestens einer verzuckerten Stärke erfolgt,
wobei die Haftklebstoffzusammensetzung mindestens einen Vernetzer enthält, der ausgewählt ist aus Polyisocyanaten und Polyaziridinen, und wobei das das Gewichtsverhältnis von Stärke zu Vernetzer in der Dispersion vorzugsweise von 1:2 bis 100:1, oder von 2:1 bis 100:1, insbesondere von 3,5:1 bis 40:1 oder von 4:1 bis 20:1 oder von 4:1 bis 15:1 oder von 4:1 bis 12:1 beträgt.

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck.

Im Folgenden werden gelegentlich die Bezeichnung "(Meth)acryl..." und ähnliche Bezeichnungen als abkürzende Schreibweise verwendet für "Acryl... oder Methacryl...". In der Bezeichnung Cx-Alkyl(meth)acrylat und analogen Bezeichnungen bedeutet x die Anzahl der C-Atome der Alkylgruppe.

Die Glasübergangstemperatur lässt sich durch Differential Scanning Calorimetrie (z.B. ASTM 3418/82, sog. "midpoint temperature") bestimmen.

Die durch den Vernetzer bewirkte Vernetzungsreaktion ist beendet, wenn keine Änderung der Klebstoffeigenschaften mehr feststellbar ist, insbesondere die Schälfestigkeit (Messung gemäß den Beispielen, Polyethylenklebefolie verklebt auf Stahlprüfkörper, gemessen nach 1 Minute) konstant ist. Die Vernetzungsreaktion wird insbesondere als beendet angesehen nach 7 Tagen Lagerung der beschichteten Schutzfolie, wobei die Lagerung vorzugsweise bei Raumtemperatur erfolgt. Bei Verwendung von Polyisocyanatvernetzern lässt sich der Fortgang der Vernetzungsreaktion auch mittels IR Spektroskopie verfolgen. Die für NCO-Gruppen typische Absorptionsbande um 2272 cm⁻¹ nimmt im Zuge der Vernetzung ab, bis sie schließlich verschwunden ist oder weitgehend verschwunden ist und konstant bleibt.

Raumtemperatur bedeutet 23°C, sofern nicht explizit etwas anderes angegeben ist.

Bei der Haftklebstoffzusammensetzung handelt es sich vorzugsweise um eine wässrige Dispersion mit darin dispergiertem Haftklebstoffpolymer. Die Haftklebstoffzusammensetzung enthält vorzugsweise von 30 bis 75 Gew.%, besonders bevorzugt von 45 bis 65 Gew.% Haftklebstoffpolymer. Der Feststoffgehalt der Haftklebstoffzusammensetzung beträgt vorzugsweise 40 bis 80, besonders bevorzugt 45 bis 75 Gew.-%.

Das Haftklebstoffpolymer wird aus einer ersten Monomerart (i) hergestellt. Die Monomerart (i) ist zu mindestens 60 Gew.%, vorzugsweise zu mindestens 70 Gew.-%, oder mindestens 75 Gew.-% und vorzugsweise bis zu 99,9 Gew.% oder bis zu 99,5 Gew.%, bezogen auf die Gesamtmenge der zur Herstellung des Haftklebstoffpolymers eingesetzten Monomere, enthalten. Die weichen Monomere (i) sind vorzugsweise ausgewählt aus Acrylsäureestern, insbesondere aus C2- bis C10 Alkylacrylaten, oder aus C₄- bis C10₁₀-Alkylacrylaten oder aus C₄- bis C₈-Alkylacrylaten. Geeignet sind z.B. Ethylacrylat, n-Butylacrylat, n-Hexylacrylat, Octylacrylat und 2-Ethylhexylacrylat sowie Mischungen dieser Monomere. Bevorzugt sind Ethylacrylat, n-Butylacrylat und 2-Ethylhexylacrylat und deren Mischungen, besonders bevorzugt n-Butylacrylat und 2-Ethylhexylacrylat und deren Mischungen.

Das Haftklebstoffpolymer wird aus einer weiteren Monomerart (ii) hergestellt. Die Monomerart (ii) kann zu 0,1 bis 5 Gew.%, vorzugsweise 0,2 bis 4 Gew.%, oder 0,5 bis 3 Gew. % bezogen auf die Gesamtmenge der zur Herstellung des Polymers eingesetzten Monomere, enthalten sein. Monomere (ii) sind ethylenisch ungesättigte Säuren oder ethylenisch ungesättigte Säureanhydride und sind radikalisch polymerisierbar. Geeignete Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure.

Das Klebstoffpolymer kann aus weiteren, von den Monomeren (i) und (ii) verschiedenen Monomeren (iii) aufgebaut sein. Die Monomere (iii) sind also keine Monomere, die wenn sie als Homopolymer polymerisiert sind, eine Glasübergangstemperatur von weniger als 0°C aufweisen und es sind keine ethylenisch ungesättigten Säuren oder ethylenisch ungesättigte Säureanhydride. Die Monomere (iii) können beispielsweise in Mengen von bis zu 30 Gew.%, z.B. von 0 bis 30 Gew.%, oder von 0,1 bis 10 Gew.%, vorzugsweise von 1 bis 5 Gew.% eingesetzt werden.

Die weiteren Monomere (iii) können z.B. harte Monomere sein welche, wenn sie als Homopolymer polymerisiert sind, eine Glasübergangstemperatur von mehr als 0 °C oder mindestens 20 °C oder mindestens 50 °C aufweisen. Die weiteren Monomere (iii) sind copolymerisierbare, ethylenisch ungesättigte Verbindungen. Geeignet sind z.B. solche ausgewählt aus der Gruppe bestehend aus von den Monomeren (i) verschiedenen C1 bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen, Hydroxylgruppen enthaltende Monomere, insbesondere C₁-C₁₀-Hydroxyalkyl-(meth)acrylate, (Meth)acrylamid oder Mischungen dieser Monomere. C₁-C₁₀-Hydroxyalkyl(meth)acrylate weisen 1-10 C-Atome in den Hydroxyalkylgruppen auf. Als weitere Monomere seien darüber hinaus Phenyloxyethylglykolmono-(meth)acrylat, Glycidyl-(meth)acrylat, Aminoalkyl(meth)acrylate wie z.B. 2-Aminoethyl-(meth)acrylat, Diacetonacrylamid (insbesondere in Kombination mit Dihydraziden wie z.B. Adipinsäuredihydrazid ADDH als Vernetzer) und Acetoacetoxyethylmethacrylat genannt. Alkylgruppen weisen vorzugsweise von 1 bis 20 C-Atome auf. Als weitere Monomere seien auch vernetzende Monomere genannt. Geeignete Monomere (iii) sind z.B. (Meth)acrylsäurealkylester mit einem C₁-C₁₀-Alkylrest. Insbesondere sind auch Mischungen der (Meth)acrylsäurealkylester geeignet. Vinylester von Carbonsäuren mit 1 bis 20 C-Atomen sind z.B. Vinylacetat, Vinyllaurat, Vinylstearat, Vinylpropionat und Versaticsäurevinylester. Als vinylaromatische Verbindungen kommen Vinyltoluol, alpha- und p-Me-thylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind zum Beispiel Butadien, Isopren und Chloropren. Als weitere Monomere (iii) bevorzugt sind C₁- bis C₁₀-Alkyl(meth)acrylate, insbesondere Methylacrylat, tert.-Butylacrylat und C₁- bis C₈-Alkylmethacrylate und Vinylester, insbesondere Vinylacetat und deren Mischungen sowie C2 bis C10 Hydroxyalkyl-(meth)acrylate. Ganz besonders bevorzugt sind Methylacrylat, Methyl(meth)acrylat, Vinylacetat und Hydroxypropylacrylat sowie Mischungen dieser Monomere. Bevorzugte Monomere (iii) sind insbesondere auch Behenyl(meth)acrylat, Cyclohexyl(meth)acrylat, 4-Hydroxybutylacrylat, Isobutylacrylat, tert.-Butyl(meth)acrylat, tert.-Butylaminoethylmethacrylat, Ureidomethacrylat und deren Mischungen.

Die Herstellung der Klebstoffpolymere durch Emulsionspolymerisation wird in Gegenwart mindestens einer Stärke vorgenommen. Unter Stärke wird auch modifizierte oder abgebaute Stärke verstanden. Die Stärke kann bei der Emulsionspolymerisation vorgelegt werden, zum Teil vorgelegt und zudosiert oder ganz während der Emulsionspolymerisation zudosiert werden. Vorteilhafterweise enthält der Polymerisationsansatz bei einem erreichten Umsatz von 80 % der zu polymerisierenden Monomeren mindestens die Hälfte der gesamten Stärkemenge. Besonders bevorzugt wird die gesamte Stärkemenge bei der Polymerisation vorgelegt. Die Gesamtmenge der Stärke beträgt vorzugsweise 0,1 bis 50 Gewichtsteile oder 1 bis 50 Gewichtsteile, besonders bevorzugt 1 bis 20 Gewichtsteile oder 2 bis 10 Gewichtsteile, bezogen auf 100 Gewichtsteile Monomere. Die Gewichtsmenge der in der Stärke insgesamt enthaltenen Hydroxylgruppen beträgt vorzugsweise 0,1 bis 60 Gew. -%, vorzugsweise 2 bis 50 Gew.-%, bezogen auf die Stärke.

Das gewichtsmittlere Molgewicht der Stärke beträgt vorzugsweise 500 bis 50000 und besonders bevorzugt von 1000 bis 25000, messbar durch Gelpermeationschromatographie. Die Stärke kann in Wasser löslich oder nur darin dispergierbar sein. Geeignet sind u.a. die sogenannten Quellstärken, die beispielsweise durch hydrothermische Behandlung von nativer Stärke erhältlich sind. Ferner eignen sich dünnkochende Stärken. Es handelt es dabei um mit Säuren oder Enzymen geringfügig abgebaute oder mit milden Oxidationsmitteln oxidierte Stärken, die auch in höheren Konzentrationen beim Kochen mit Wasser keine viskosen Kleister, sondern relativ dünne Flüssigkeiten ergeben. Außerdem sind säuremodifizierte Stärken geeignet, die durch Erwärmen einer wässrigen Stärkesuspension unterhalb der Verkleisterungstemperatur in Gegenwart geringer Säuremengen gewonnen werden. Weiterhin kommen oxidativ modifizierte Stärken in Betracht. Als Oxidationsmittel können z.B. Chromsäure, Permanganat, Wasserstoffperoxid, Stickstoffdioxid, Hypochlorit oder Perjodsäure herangezogen werden. Als Ausgangsstärken sind prinzipiell alle nativen Stärken wie Getreidestärken (z.B. Mais, Weizen, Reis oder Hirse), Knollen- und Wurzelstärken (z.B. Kartoffeln, Tapiokawurzeln oder Arrowroot) oder Sagostärken geeignet. Vorteilhaft ist die Verwendung von Röstdextrinen, wie sie z.B. in der EP-A 408 099 sowie in der EP-A 334 515 beschrieben sind. Sie sind durch Erhitzen von feuchttrockner Stärke, meist in Anwesenheit geringer Mengen Säure, erhältlich. Typische Röstdextrine sind z.B. im Handel erhältliche Weiß- und Gelbdextrine. Der Begriff Dextrin wird hier ganz generell für Stärkeabbauprodukte verwendet. Mit ganz besonderem Vorteil wird jedoch die radikalische Emulsionspolymerisation in Gegenwart von verzuckerten Stärken durchgeführt. Hierbei handelt es sich um ein durch Hydrolyse in wässriger Phase erhältliches Stärkeabbauprodukt. Hierbei werden wässrige Polymerdispersionen erhalten, die neben hoher mechanischer und thermischer Stabilität auch gute rheologische Eigenschaften auch nach Lagerung aufweisen. Detailliertere Angaben zur Herstellung der genannten Stärken und Stärkederivate findet man in G. Tegge, Stärke und Stärkederivate, Behr's Verlag, Hamburg 1984. Selbstverständlich können die genannten Stärken und Stärkederivate in z.B. durch Veretherung oder Veresterung chemisch modifizierter Form erfindungsgemäß angewendet werden. Diese chemische Modifizierung kann bereits an der Ausgangsstärke vor deren Abbau oder danach durchgeführt werden. Veresterungen sind sowohl mit anorganischen als auch mit organischen Säuren, deren Anhydriden oder Chloriden möglich. Von besonderem Interesse sind phosphatierte und acetylierte Derivate. Die gängigste Methode zur Veretherung ist die Behandlung mit organischen Halogenverbindungen, Epoxiden oder Sulfaten in wässriger alkalischer Lösung. Besonders geeignete Ether sind Alkylether, Hydroxyalkylether, Carboxyalkylether und Allylether. Ferner kommen cyanalkylierte Derivate sowie Umsetzungsprodukte mit 2,3-Epoxipropyltrimethylammoniumchlorid in Betracht. Chemisch nicht modifizierte Produkte sind jedoch bevorzugt. Geeignet sind auch Abbauprodukte der Cellulose, beispielsweise Cellobiose und ihre Oligomeren.

Die erfindungsgemäß anzuwendenden verzuckerten Stärken (abgebaute Stärken, Maltodextrine) sind als solche im Handel erhältlich, z.B. unter den Bezeichnungen C Plus oder C-Star Sweet von Cargill oder von Roquette. Derartige verzuckerte Stärken sind von den Röstdextrinen u.a. dadurch chemisch verschieden, dass bei einem hydrolytischen Abbau in wässrigem Medium (üblicherweise Suspensionen oder Lösungen), der in der Regel bei Feststoffgehalten von 10 bis 30 Gew.% sowie vorzugsweise säure- oder enzymkatalysiert vorgenommen wird, die Möglichkeit der Rekombination und Verzweigung im Wesentlichen nicht gegeben ist, was sich nicht zuletzt auch in anderen Molekulargewichtsverteilungen äußert. So haben sich verzuckerte Stärken, die eine bimodale Molekulargewichtsverteilung aufweisen, erfindungsgemäß als besonders vorteilhaft erwiesen. Die Herstellung verzuckerter Stärken ist allgemein bekannt und u.a. in G. Tegge, Stärke und Stärkederivate, Behr's Verlag, Hamburg 1984, S. 173 und S. 220 ff., sowie in der EP-A 441 197 beschrieben. Die verzuckerten Stärken sind normalerweise bei Raumtemperatur in Wasser vollständig löslich, wobei die Löslichkeitsgrenze in der Regel oberhalb von 50 Gew.-% liegt, was sich für die Herstellung der wässrigen Polymerisatdispersionen als besonders vorteilhaft erweist. Ferner ist es von Vorteil, wenn der Gewichtsanteil der verzuckerten Stärken, der ein Molekulargewicht unterhalb von 1000 aufweist, wenigstens 10 Gew.-%, jedoch nicht mehr als 70 Gew.-% beträgt. Darüber hinaus ist es empfehlenswert, solche verzuckerten Stärken anzuwenden, deren Dextroseäquivalent DE mindestens 1 oder mindestens 5 oder mindestens 10 und bis zu 40 oder bis zu 25, z.B. von 1 bis 40 oder von 1 bis 25 beträgt. Der DE-Wert charakterisiert das Reduktionsvermögen bezogen auf das Reduktionsvermögen von wasserfreier Dextrose und wird nach DIN 10 308 Ausgabe 5.71, des Normenausschusses Lebensmittel und landwirtschaftliche Produkte, bestimmt (vgl. auch Günther Tegge, Stärke und Stärkederivate, Behr's Verlag, Hamburg 1984, S. 305). Außerdem hat es sich gezeigt, dass in ihrem Eigenschaftsprofil besonders günstige wässrige Polymerisatdispersionen dann erhalten werden, wenn man verzuckerte Stärken einsetzt, deren 40 gew.-%ige wässrige Lösungen bei 25 °C und einem Schergefälle von 75 s⁻¹ eine nach DIN 53 019 bestimmte dynamische Viskosität η⁴⁰ [Pa s] von 0,005 bis 0,06, vorzugsweise von 0,005 bis 0,03, aufweisen.

Die Haftklebstoffpolymere sind durch radikalische Polymerisation von ethylenisch ungesättigten Verbindungen (Monomeren) erhältlich. Die Herstellung der Polymere erfolgt vorzugsweise durch Emulsionspolymerisation, es handelt sich daher vorzugsweise um Emulsionspolymerisate. Bei der Emulsionspolymerisation werden ethylenisch ungesättigte Verbindungen (Monomere) in Wasser polymerisiert, wobei ionische und/oder nichtionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden. Die grenzflächenaktiven Substanzen werden üblicherweise in Mengen von 0,1 bis 10 Gew.-Teilen, vorzugsweise 0,2 bis 5 Gew.-Teilen bezogen auf 100 Gew.-Teile der zu polymerisierenden Monomeren verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Trialkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel 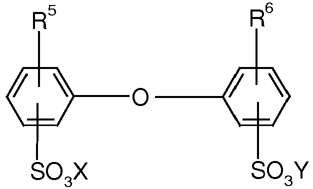 worin R5 und R6 Wasserstoff oder C4- bis C14-Alkyl bedeuten und nicht gleichzeitig Wasserstoff sind, und X und Y Alkalimetallionen und/oder Ammoniumionen sein können. Vorzugsweise bedeuten R5, R6 lineare oder verzweigte Alkylreste mit 6 bis 18 C-Atomen oder Wasserstoff und insbesondere mit 6, 12 und 16 C-Atomen, wobei R5 und R6 nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen in denen X und Y Natrium, R5 ein verzweigter Alkylrest mit 12 C-Atomen und R6 Wasserstoff oder R5 ist. Häufig werden technische Gemische verwendet, die einen Anteil von 50 bis 90 Gew.-% des monoalkylierten Produktes aufweisen. Handelsprodukte geeigneter Emulgatoren sind z.B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol® VSL, Emulphor® NPS 25. Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Sulfonsäuren und Sulfate, Sulfonate oder Carboxylate. Insbesondere können auch Gemische von ionischen und nichtionischen Emulgatoren verwendet werden.

Die Emulsionspolymerisation kann mit wasserlöslichen Initiatoren gestartet werden. Wasserlösliche Initiatoren sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid. Als Initiator geeignet sind auch so genannte Reduktions-Oxidations(Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z.B. um die bereits vorstehend genannten Initiatoren für die Emulsionspolymerisation. Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natriumperoxidisulfat, tert-Butylhydroperoxid/ Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration der Initiatoren 0,1 bis 30 Gew.-%, bevorzugt 0,5 bis 20 Gew.-%, besonders bevorzugt 1,0 bis 10 Gew.-%, bezogen auf die zu polymerisierenden Monomeren. Es können auch mehrere, verschiedene Initiatoren bei der Emulsionspolymerisation Verwendung finden.

Bei der Polymerisation können Molekulargewichtsregler eingesetzt werden, z.B. in Mengen von 0,01 bis 0,8 Gewichtsteile, oder von 0,01 bis 0,1 Gewichtsteile auf 100 Gew.-Teile der zu polymerisierenden Monomeren. Hierdurch kann durch eine Kettenabbruchsreaktion die Molmasse des Emulsionspolymerisats kontrolliert bzw. verringert werden. Die Regler werden dabei an das Polymer gebunden, im Allgemeinen an das Kettenende. Geeignete Regler sind z.B. organische Verbindungen die Schwefel in gebundener Form enthalten (z.B. Verbindungen mit einer Thiolgruppe), aliphatische und/oder araliphatische Halogenverbindungen, aliphatische und/oder aromatische Aldehyde, ungesättigte Fettsäuren (wie z.B. Ölsäure), Diene mit nicht konjugierten Doppelbindungen (wie z.B. Divinylmethan, Terpinolen oder Vinylcyclohexen), Kohlenwasserstoffe mit leicht abstrahierbaren Wasserstoffatomen (wie z.B. Toluol), organische Säuren bzw. deren Salze (wie z.B. Ameisensäure, Natriumformiat, Ammoniumformiat), Alkohole (wie z.B. Isopropanol) sowie Phosphorverbindungen (wie z.B. Natriumhypophosphit). Es ist aber auch möglich, Gemische sich nicht störender vorgenannter Regler einzusetzen. Bei den Reglern handelt es sich im Allgemeinen um niedermolekulare Verbindungen mit einem Molgewicht kleiner 2000, insbesondere kleiner 1000 g/mol. Günstig ist es, wenn eine Teil- oder die Gesamtmenge der Regler dem wässrigen Reaktionsmedium vor der Initiierung der radikalischen Polymerisation zugeführt wird. Darüber hinaus kann eine Teil- oder die Gesamtmenge der radikalkettenübertragenden Verbindung dem wässrigen Reaktionsmedium vorteilhaft auch gemeinsam mit den Monomeren während der Polymerisation zugeführt werden.

Organische Verbindungen mit einer Thiolgruppe sind z.B. primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, Mercaptoalkylcarbonsäureester z.B. von C2- bis C4-Carbonsäuren mit 1 bis 18 C-Atomen in der Alkylgruppe, z.B. 2-Mercaptoethyl-propionat, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen. Bevorzugte organische Verbindungen, die Schwefel in gebundener Form enthalten sind insbesondere tert.-Butylmercaptan, Thioglycolsäureethylester, Mercaptoethanol, Mercaptopropyltrimethoxysilan, tert.-Dodecylmercaptan, Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mer-captopropionsäure, Mercaptobernsteinsäure, Thioessigsäure und Thioharnstoff. Besonders bevorzugte Thioverbindungen sind tert.-Butylmercaptan, Thioglycolsäureethylester, Mercaptoethanol, Mercaptopropyltrimethoxysilan oder tert.-Dodecylmercaptan.

Aliphatische und/oder araliphatische Halogenverbindungen sind z.B. n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid. Aliphatische und/oder aromatische Aldehyde sind z.B. Formaldehyd, Acetaldehyd, Propionaldehyd und/oder Benzaldehyd.

Die Emulsionspolymerisation erfolgt in der Regel bei 30 bis 130°C, vorzugsweise bei 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt. Zur Entfernung der Restmonomeren wird üblicherweise auch nach dem Ende der eigentlichen Emulsionspolymerisation, d.h. nach einem Umsatz der Monomeren von mindestens 95 % Initiator zugesetzt. Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Das so hergestellte Polymer wird vorzugsweise in Form seiner wässrigen Dispersion verwendet. Die Größenverteilung der Dispersionsteilchen kann monomodal, bimodal oder multimodal sein. Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen. Der pH-Wert der Polymerdispersion wird vorzugsweise auf pH größer 3,5, insbesondere auf einen pH-Wert zwischen 3,5 und 8 eingestellt. Die Glasübergangstemperatur des Haftklebstoffpolymers ist vorzugsweise kleiner oder gleich 0 °C, besonders bevorzugt -60°C bis 0°C oder -60 bis -10 °C und ganz besonders bevorzugt -55 bis - 20 °C. Die Glasübergangstemperatur lässt sich durch Differential Scanning Calorimetrie (z.B. ASTM 3418/82, sog. "midpoint temperature") bestimmen.

Die Dispersion des radikalisch polymerisierten Polymeren enthält mindestens einen Vernetzer, ausgewählt aus Polyisocyanaten und Polyaziridinen. Gemäß der vorliegenden Anmeldung können die Vernetzer einzeln oder als Mischungen aus zwei oder mehreren Vernetzern eingesetzt werden. Die Vernetzung tritt dabei ganz oder überwiegende mit den Hydroxylgruppen der Stärke ein. Der Zusatz des Vernetzers erfolgt aufgrund der eintretenden Vernetzungsreaktion erst kurz vor der späteren Verwendung der Dispersion, d.h. kurz vor der Beschichtung der Polymerfolie. Nach Zusatz des Vernetzers bleibt ausreichend Zeit, im Allgemeinen bis zu 8 Stunden zur Verarbeitung.

Geeignete Polyisocyanate sind beispielsweise aliphatische oder cycloaliphatische oder aromatische Diisocyanate oder höherfunktionelle Polyisocyanate, welche sich von den Diisocyanaten ableiten. Als Polyisocyanate kommen z.B. geradlinige oder verzweigte C4-C14-Alkylendiisocyanate, cycloaliphatische Diisocyanate mit insgesamt 6 bis 12 C-Atomen, aromatische Diisocyanate mit insgesamt 8 bis 14 C-Atomen, Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate oder deren Gemische in Betracht. Als Diisocyanate genannt seien z.B. aliphatische Diisocyanate wie Tetramethylendiisocyanat, Hexamethylendiisocyanat (1,6-Di-isocyanatohexan), Octamethylendiisocyanat, Decamethylendiisocyanat, Dodecamethylendiisocyanat, Tetradecamethylendiisocyanat, Trimethylhexandiisocyanat oder Tetramethylhexandiisocyanat; cycloaliphatische Diisocyanate wie 1,4-, 1,3- oder 1,2-Di-isocyanatocyclohexan, 4, 4' -Di(isocyanatocyclohexyl)methan, 1-Isocyanato-3, 3, 5-trimethyl-5- (isocyanatomethyl)cyclohexan (Isophorondiisocyanat) oder 2,4- oder 2,6-Diisocyanato-1-methylcyclohexan oder aromatische Diisocyanate wie 2,4-Diisocya-natotoluol, 2,6-Diisocyanatotoluol, Tetramethylxylylendiisocyanat, 1,4-Diisocyanatobenzol, 4,4' - oder 2,4-Diisocyanatodiphenylmethan, p-Xylylendiisocyanat, sowie Isopropenyldimethyltoluylendiisocyanat. Als Polyisocyanate seien z.B. mehrkernige Homologe der vorstehend genannten aromatischen Diisocyanate genannt.

Weiterhin genannt seien:
a) Isocyanuratgruppen aufweisende Polyisocyanate von aromatischen, vorzugsweise aliphatischen und/oder cycloaliphatischen Diisocyanaten. Besonders bevorzugt sind hierbei die entsprechenden Isocyanato-Isocyanurate auf Basis von Hexamethylendiisocyanat und Isophorondiisocyanat. Bei den vorliegenden Isocyanuraten handelt es sich insbesondere um einfache Trisisocyanatoalkyl- bzw. Tris-isocyantocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew. -%, insbesondere 15 bis 25 Gew. -% und eine mittlere NCO-Funk-tionalität von 3 bis 4,5.
b) Uretdiondiisocyanate mit aromatischen, vorzugsweise aliphatisch und/oder cycloaliphatisch gebundenen Isocyanatgruppen, vorzugsweise von Hexamethylendiisocyanat oder Isophorondiisocyanat abgeleitet. Bei Uretdiondiisocyanaten handelt es sich um cyclische Dimerisierungsprodukte von Diisocyanaten.
c) Biuretgruppen aufweisende Polyisocyanate mit aromatischen, vorzugsweise aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im Allgemeinen einen NCO-Gehalt von 18 bis 22 Gew.-% und eine mittlere NCO-Funktionalität von 3 bis 3,5 bzw. bis 4,5 auf.
d) Urethan- und/oder Allophanatgruppen aufweisende Polyisocyanate mit aromatischen, vorzugsweise aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit einfachen mehrwertigen Alkoholen wie z.B. Trimethylolpropan, Glycerin, 1,2-Dihydroxypropan oder deren Gemischen erhalten werden können. Diese Urethan- und/oder Allophanatgruppen aufweisenden Polyisocyanate haben im Allgemeinen einen NCO-Gehalt von 12 bis 20 Gew. -% und eine mittlere NCO-Funktionalität von 2,5 bis 3.
e) Oxadiazintriongruppen enthaltende Polyisocyanate, vorzugsweise von Hexamethylendiisocyanat oder von Isophorondiisocyanat abgeleitet. Solche Oxadiazintriongruppen enthaltenden Polyisocyanate sind aus Diisocyanat und Kohlendioxid herstellbar.
f) Uretonimin-modifizierte Polyisocyanate.

Die Polyisocyanate a) bis f) können auch im Gemisch, gegebenenfalls auch im Gemisch mit Diisocyanaten, eingesetzt werden. Bevorzugt sind aliphatische bzw. cycloaliphatische Polyisocyanate, bzw. Diisocyanate.

Besonders bevorzugt sind hydrophil modifizierte Polyisocyanate, welche selbstdispergierbar in Wasser sind. Zur Herstellung der selbstdispergierbaren Polyisocyanate werden die oben bezeichneten Polyisocyanate umgesetzt mit Verbindungen, die mindestens eine, vorzugsweise eine hydrophile Gruppe, welche ionisch oder nichtionisch sein kann, und mindestens eine, vorzugsweise eine mit Isocyanat reaktive Gruppe, z.B. eine Hydroxy-, Mercapto- oder primäre oder sekundäre Aminogruppe (kurz NH-Gruppe) aufweisen. Bei der hydrophilen Gruppe kann es sich z.B. um eine ionische oder in eine ionische Gruppe überführbare Gruppe handeln. Anionische bzw. in anionische Gruppen überführbare Gruppen sind z.B. Carbonsäure- oder Sulfonsäuregruppen. Geeignete Verbindungen sind z.B. Hydroxycarbonsäuren, wie Hydroxypivalinsäure oder Dimethylolpropionsäure oder Hydroxysulfonsäuren oder Aminsulfonsäuren. Kationische bzw. in kationische Gruppen überführbare Gruppen sind z.B. quaternäre Ammoniumgruppen bzw. tertiäre Aminogruppen. In ionische Gruppen überführbare Gruppen werden vorzugsweise vor oder während der Dispergierung der erfindungsgemäßen Mischung in Wasser in ionische Gruppen überführt. Zur Überführung z.B. von Carbonsäuregruppen oder Sulfonsäuregruppen in anionische Gruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden. Zur Überführung von tertiären Aminogruppe in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyliodid, Dimethylsulfat, Benzylchlorid, Chloressigethylester oder Bromacetamid geeignet. Weitere geeignete Neutralisations- und Quarternierungsmittel sind z.B. in der US-PS 3 479 310, Spalte 6, beschrieben. Der Gehalt der ionischen Gruppen bzw. in ionische Gruppen überführbaren Gruppen beträgt vorzugsweise 0,1 bis 3 mol pro kg der in Wasser selbstdispergierbaren Polyisocyanate. Nichtionische hydrophile Gruppen sind z.B. Polyalkylenethergruppen, insbesondere solche mit 10 bis 80 Alkylenoxideinheiten. Bevorzugt sind Polyethylenethergruppen oder Polyalkylenethergruppen, die neben anderen Alkylenoxideinheiten, z.B. Propylenoxid, mindestens 10 Ethylenoxideinheiten enthalten. Geeignete Verbindungen sind z.B. Polyalkylenetheralkohole. Der Gehalt der hydrophilen nichtionischen Gruppen, insbesondere der Polyalkylenethergruppen beträgt vorzugsweise 0,5 bis 20, besonders bevorzugt 1 bis 15 Gew.-%, bezogen auf die in Wasser selbstdispergierbaren Polyisocyanate. Die Herstellung der in Wasser selbstdispergierbaren Polyisocyanate ist aus der DE-A-35 21 618, DE-A-40 01 783 und DE-A-42 03 510 bekannt. Bei der Herstellung der in Wasser selbstdispergierbaren Polyisocyanate können die Verbindungen mit mindestens einer hydrophilen Gruppe und mindestens einer gegenüber Isocyanat reaktiven Gruppe mit einem Teil des Polyisocyanats umgesetzt und die erhaltenen hydrophil modifizierten Polyisocyanate dann mit den übrigen Polyisocyanaten gemischt werden. Die Herstellung kann aber auch so erfolgen, dass die Verbindungen zur Gesamtmenge der Polyisocyanate zugesetzt wird und dann die Umsetzung "in situ" durchgeführt wird. Bevorzugte wasseremulgierbare Polyisocyanate sind solche mit hydrophilen, nichtionischen Gruppen, insbesondere Polyalkylenethergruppen. Vorzugsweise wird dabei die Wasseremulgierbarkeit allein durch die hydrophilen nichtionischen Gruppen erreicht.

Als Vernetzer können auch Polyaziridine eingesetzt werden. Hierbei handelt es sich um polyfunktionelle Aziridinverbindungen mit mindestens zwei Aziridingruppen. Die Aziridingruppen können am Stickstoffatom substituiert sein, z.B. mit einem Alkyl-, Alkenyl-, Aryl- oder Aralkylrest. Geeignet sind z.B. Aziridinvernetzer auf Basis von Polyethern oder substituierten Kohlenwasserstoffen, zum Beispiel 1,6-bis-N-Aziridinohexan. Die polyfunktionelle Aziridinverbindung, die in der erfindungsgemäßen Zusammensetzung enthalten ist, kann vorzugsweise ausgewählt werden aus der Gruppe bestehend aus den Michael-Additionsprodukten von optional substituiertem Ethylenimin an Ester von mehrwertigen Alkoholen mit alpha,beta-ungesättigten Carbonsäuren und den Additionsprodukten von optional substituiertem Ethylenimin an Polyisocyanate. Geeignete mehrwertige Alkoholkomponenten sind beispielsweise Trimethylolpropan, Neopentylglykol, Glycerin, Pentaerythrit, 4,4'-Isopropylidendiphenol und 4,4'-Methylendiphenol. Als alpha,beta-ungesättigte Carbonsäuren kommen beispielsweise Acryl- und Methacrylsäure, Crotonsäure und Zimtsäure in Frage. Besonders bevorzugt enthält die erfindungsgemäße Zusammensetzung Acrylsäureester. Die korrespondierenden mehrwertigen Alkohole der alpha,beta-ungesättigten Carbonsäureester können gegebenenfalls Alkohole sein, die an ihren OH-Funktionen teilweise oder vollständig mit Alkylenoxiden einfach oder mehrfach verlängert sind. Hierbei kann es sich beispielsweise um die mit Alkylenoxiden einfach oder mehrfach verlängerten oben genannten Alkohole handeln. Besonders geeignete Alkylenoxide sind Ethylenoxid und Propylenoxid. Beispiele für geeignete Polyaziridine sind Trimethylolpropan-tris-(beta-aziridino)-propionat, Neopentylglykoldi-(beta-aziridino)-propionat, Glycerin-tris-(beta-aziridino)-propionat, Pentaerythrit-tetra-(beta-aziridino)-propionat, 4,4'-Isopropylidendiphenoldi-(beta-aziridino)-propionat, 4,4'-Methylendiphenoldi-(beta-aziridino)-propionat, 1,6-Hexamethylen-di-(N,N-ethylenharnstoff), 4,4'-Methylen-bis-(phenyl-N,N-ethylenharnstoff), 1,3,5-Tris-(omega-hexamethylen-N,N-ethylenharnstoff)-biuret und Gemische davon. Die polyfunktionellen Aziridinverbindungen können optional an ihren Aziridineinheiten substituiert sein.

Die Menge der Vernetzer beträgt vorzugsweise 0,05 bis 10 Gew-teile, besonders bevorzugt 0,5 bis 5 Gew-teile bezogen auf die Summe aus den Gewichtsanteilen der mindestens einen Stärke und des mindestens einen Haftklebstoffpolymers.

Die Haftklebstoffzusammensetzung enthält vorzugsweise von 0,05 bis 10 Gew.%, besonders bevorzugt von 0,1 bis 3 Gew.% des mindestens einen Vernetzers.

Vorzugsweise handelt es sich um eine Schutzfolie wobei die Haftklebstoffzusammensetzung mindestens ein Haftklebstoffpolymer enthält, welches gebildet ist durch Emulsionspolymerisation aus
(i) 60 bis 99,9 Gew.%, bezogen auf die Summe der Monomere, mindestens eines weichen Monomers, ausgewählt aus der Gruppe bestehend aus n-Butylacrylat, Ethylacrylat und 2-Ethylhexylacrylat und Mischungen dieser Monomere,
(ii) 0,1 - 5 Gew.%, bezogen auf die Summe der Monomere, mindestens eines Monomers ausgewählt aus der Gruppe bestehend aus Acrylsäure, Methacrylsäure und Mischungen dieser Monomere,
(iii) 0 bis 30 Gew.% von (i) und (ii) verschiedene Monomere, ausgewählt aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, Hydroxylgruppen enthaltende Monomeren, (Meth)acrylamid, Phenyloxyethylglykolmono(meth)acrylat, Glycidyl-(meth)acrylat, Aminoalkyl(meth)acrylaten Diacetonacrylamid (insbesondere in Kombination mit Dihydraziden wie z.B. Adipinsäuredihydrazid ADDH als Vernetzer) und Acetoacetoxyethylmethacrylat und Mischungen dieser Monomere,
wobei die Emulsionspolymerisation der Monomere in Gegenwart von mindestens einer verzuckerten Stärke in einer Menge von 0,1 bis 50 Gewichtsteilen bezogen auf 100 Gewichtsteile Monomere des Haftklebstoffpolymers erfolgt,
und wobei die Haftklebstoffzusammensetzung mindestens einen Vernetzer enthält, der ausgewählt ist aus Polyisocyanaten und Polyaziridinen,
wobei das Gewichtsverhältnis von verzuckerter Stärke zu Vernetzer in der Dispersion vorzugsweise von 1:2 bis 100:1 oder von 2:1 bis 100:1, insbesondere von 3,5:1 bis 40:1 oder von 4:1 bis 20:1 oder von 4:1 bis 15:1 oder von 4:1 bis 12:1.beträgt.
Durch Einstellung des Gewichtsverhältnisses von Stärke zu Vernetzer kann insbesondere das Weissanlaufverhalten des Klebstofffilms bei Kontakt mit Wasser verbessert werden.

Die Haftklebstoffzusammensetzungen können allein aus dem Haftklebstoffpolymer bzw. der wässrigen Dispersion des Haftklebstoffpolymers sowie dem Vernetzer bestehen. Die Haftklebstoffzusammensetzung kann jedoch auch noch weitere Zusatzstoffe enthalten, z.B. Füllstoffe, Farbstoffe, Verlaufsmittel, Verdicker, vorzugsweise Assoziativverdicker, Entschäumer, weitere Vernetzer, Weichmacher, Pigmente, Netzmittel oder Tackifier (klebrigmachende Harze). Tackifier sind z. B. aus Adhesive Age, Juli 1987, Seite 19-23 oder Polym. Mater. Sci. Eng. 61 (1989), Seite 588-592 bekannt. Für eine bessere Benetzung von Oberflächen können die Haftklebstoffe insbesondere Benetzungshilfsmittel (Netzmittel), z. B. Fettalkoholethoxylate, Alkylphenolethoxylate, Nonylphenolethoxylate, Polyoxyethylene/-propylene oder Natriumdodecylsulfonate enthalten. Die Menge an Zusatzstoffen beträgt im allgemeinen 0,05 bis 5 Gew.-Teile, insbesondere 0,1 bis 3 Gew.-Teile auf 100 Gew.-Teile Polymer (fest).

Ein Tackifier ist ein polymerer oder oligomerer Zusatzstoffe für Klebstoffpolymere oder allgemein für Elastomere, der deren Autoadhäsion (Tack, Eigenklebrigkeit, Selbsthaftung) erhöht, sodass sie nach kurzem leichten Andruck fest auf Oberflächen haften. Tackifier sind z.B. Naturharze, wie Kolophoniumharze und deren durch Disproportionierung oder Isomerisierung, Polymerisation, Dimerisation, Hydrierung entstehenden Derivate oder Terpenharze. Diese können in ihrer Salzform mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit. Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, alpha-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 50000, insbesondere unter 30 000. Die Polyacrylate bestehen bevorzugt zu mindestens 60, insbesondere mindestens 80 Gew.-% aus C₁-C₈ Alkyl(meth)acrylaten. Geeignet sind z.B. die in der WO 2013/117428 beschriebenen niedrigmolekularen Polymerisate und Oligomere mit einem gewichtsmittleren Molekulargewicht von weniger als 50000 und einer Glasübergangstemperatur von größer oder gleich -40 °C bis kleiner oder gleich 0 °C, vorzugsweise von größer oder gleich -35°C, bis kleiner oder gleich 0 °C, herstellbar durch Emulsionspolymerisation in Gegenwart mindestens eines Molekulargewichtsreglers und herstellbar aus einem Monomergemisch enthaltend mindestens 40 Gew.% mindestens eines C1- bis C20-Alkyl(meth)acrylats.

Bevorzugte Tackifier sind natürliche oder chemisch modifizierte Kolophoniumharze. Kolophoniumharze bestehen zum überwiegenden Teil aus Abietinsäure oder Abietinsäurederivaten. Die Tackifier können in einfacher Weise der Polymerdispersion zugesetzt werden. Vorzugsweise liegen die Tackifier dabei selber in Form einer wässrigen Dispersion vor. Die Gewichtsmenge der Tackifier beträgt vorzugsweise 5 bis 100 Gew.-Teile, besonders bevorzugt 10 bis 50 Gew.-Teile. bezogen auf 100 Gew.-Teile Polymer (fest/fest).

Bei den Haftklebstoffzusammensetzungen handelt es sich um Dispersionen von Polymeren in wässrigem Medium. Bei dem wässrigen Medium kann es sich z.B. um vollständig entsalztes Wasser handeln oder auch um Mischungen aus Wasser und einem damit mischbaren Lösemittel wie Methanol, Ethanol oder Tetrahydrofuran. Vorzugsweise werden keine organischen Lösungsmittel eingesetzt. Die Feststoffgehalte der Haftklebstoffzusammensetzungen betragen vorzugsweise von 15 bis 75 Gew.-%, bevorzugt von 40 bis 60 Gew.-%, insbesondere größer 50 Gew.%. Der pH-Wert der Klebstoffzusammensetzungen wird vorzugsweise auf pH größer 3,5 insbesondere auf einen pH-Wert zwischen 3,5 und 9 eingestellt.

Die Haftklebstoffzusammensetzung kann zur Herstellung von haftklebenden Schutzfolien verwendet werden. Gegenstand der Erfindung ist daher auch ein Verfahren zur Herstellung von Schutzfolien, wobei eine Haftklebstoffzusammensetzung zur Verfügung gestellt wird, wobei die Haftklebstoffzusammensetzung mindestens ein Haftklebstoffpolymer enthält, welches gebildet ist durch Emulsionspolymerisation aus
(i) mindestens 60 Gew.%, bezogen auf die Summe der Monomere, mindestens eines weichen Monomers, welches, wenn es als Homopolymer polymerisiert ist, eine Glasübergangstemperatur von weniger als 0°C aufweist,
(ii) 0,1 - 5 Gew.%, bezogen auf die Summe der Monomere, mindestens einer ethylenisch ungesättigten Säure oder mindestens eines ethylenisch ungesättigten Säureanhydrids,
(iii) optional weitere, von (i) und (ii) verschiedene Monomere,
wobei die Emulsionspolymerisation der Monomere in Gegenwart von mindestens einer verzuckerten Stärke erfolgt,
und wobei die Haftklebstoffzusammensetzung mindestens einen Vernetzer enthält, der ausgewählt ist aus Polyisocyanaten und Polyaziridinen,
wobei die Schutzfolie eine Polymerfolie ist, die mit der Haftklebstoffzusammensetzung beschichtet wird und wobei die durch den Vernetzer bewirkte Vernetzungsreaktion beendet ist, ohne dass die haftklebende Schutzfolie auf ein Substrat aufgeklebt ist.

Die Schutzfolien sind zumindest teilweise mit dem Haftklebstoff beschichtet. Vorzugsweise sind die Schutzfolien nach der Verklebung auf Substrate wiederabziehbar. Geeignete Trägermaterialien sind Kunststofffolien, insbesondere thermoplastische Kunststofffolien. Als thermoplastische Folie kommen z.B. Folien aus Polyolefinen (z.B. Polyethylen, Polypropylen), Polyolefincopolymeren, Folien aus Polyestern (z.B. Polyethylenterephtalat) oder Polyacetat in Betracht. Diese können einlagig oder mehrlagig aufgebaut sein. Die Oberflächen der thermoplastischen Polymerfolien sind vorzugweise coronabehandelt. Die Schutzfolien sind einseitig mit Klebstoff beschichtet. Bevorzugte Substrate, auf die die Schutzfolien aufgeklebt werden können sind Glas, Holz, Metall, Kunststoff, Textilien oder Teppich.

Die Schutzfolien sind vorzugsweise transparent oder pigmentiert und haben vorzugsweise eine Dicke von 10 bis 200 µm.

Die Haftklebstoffzusammensetzung nach üblichen Methoden wie Rollen, Rakeln oder Streichen auf die Schutzfolien aufgetragen werden. Die Auftragsmenge beträgt bevorzugt 0,1 bis 30 g, besonders bevorzugt 2 bis 20 g Feststoff pro m². Nach dem Auftragen folgt im Allgemeinen ein Trocknungsschritt zur Entfernung des Wasser bzw. der Lösungsmittel. Das Wasser kann durch Trocknung bei z.B. 23 bis 150°C entfernt werden. Die so erhaltenen, beschichteten Folien werden solange gelagert, bis die Vernetzungsreaktion abgeschlossen ist, z.B. nach einer Lagerung von mindestens 7 Tagen. Vorzugsweise wird bei Raumtemperatur gelagert.

Die Folien können vor oder nach dem Aufbringen des Klebstoffs zu einer für die beabsichtigte Anwendung geeigneten Form zugeschnitten werden. Zur späteren Verwendung kann die mit Haftklebstoff beschichtete Seite der Folie mit einem Releasepapier, z. B. mit einem silikonisierten Papier, abgedeckt werden.

### Beispiele

Es werden folgende Abkürzungen verwendet:
- DE: Dextrose Äquivalent
- C Plus: Maltodextrin C Plus 10998, Cargill, DE 16,5
- C-Sweet: C-Star-Sweet 01403, Cargill, abgebaute Stärke, Glukosesirup, DE 26-32
- Roquette: Maltodextrin Roquette 1967, Roquette, DE 18 bis 20
- Basonat®: Basonat® HW 100, wasserdispergierbares Polyisocyanat basierend auf isocyanuratiertem Hexamethylendiisocyanat, BASF SE
- Emuldur®: Emuldur® 3643, BASF SE, wasserdispergierbares Polyaziridin
- Lutavit® C: L(+)-Ascorbinsäure-Lösung, BASF SE
- Dowfax® 2A1: Alkyldiphenyloxiddisulfonat, Emulgator
- Disponil® LDBS 20: Emulgator
- pphm: Gewichtsteile auf 100 Gewichtsteile Monomer (parts per hundert parts monomers)
- FG: Feststoffgehalt
- LD: Lichtdurchlässigkeit; Messgröße, um Teilchengrößenunterschiede zu bestimmen. Hierbei wird die Polymerdispersion auf 0,01% Feststoffgehalt verdünnt und die Lichtdurchlässigkeit im Vergleich zu reinem Wasser gemessen
- Tg (berechnet): Glasübergangstemperatur, berechnet nach der Fox- Gleichung aus der Glasübergangstemperatur, der Homopolymerisate der im Copolymerisat vorhandenen Monomeren und deren Gewichtsanteil: 1/Tg = xA/TgA + xB/TgB + xC/TgC + ........ Tg: berechnete Glasübergangstemperatur des Copolymeren
- TgA:: Glasübergangstemperatur des Homopolymeren von Monomer A
- TgB, TgC:: Tg entsprechend für Monomere B, C, etc.
- xA:: Masse Monomer A/Gesamtmasse Copolymer,
- xB, xC: entsprechend für Monomere B, C etc.

### Beispieldispersion 1a

Ein Gemisch aus 200 g Wasser, 100 g einer 50%igen Maltodextrinlösung (C Plus), sowie 6,06 g einer 30%igen Polystyrolfeinsaat (in Wasser) wird auf 85°C erhitzt und 5 min gerührt. Danach werden 10 g einer 2,5%igen Natriumperoxodisulfatlösung zugeben und erneut 5 min gerührt. Anschließend erfolgt die Dosierung der Monomere in 2h und parallel dazu die Dosierung von 40 g Natriumperoxodisulfat (2,5%ige Lösung in Wasser).

### Monomerzulauf 1a:

200 g Wasser
22,22 g Dowfax® 2A1 (45%ig in Wasser)
5 g Acrylsäure
495 g n-Butylacrylat

Im Anschluss erfolgt eine Nachpolymerisation von 45 min. Danach werden 10 g einer 5%igen Wasserstoffperoxidlösung zugegeben und in 30 min 10 g einer 10%igen Lutavit® C -Lösung zudosiert. Es erfolgt die Zugabe von 30 g Wasser und 3,6 g einer 12,5 %igen Ammoniaklösung.

### Beispieldispersionen 1b, 1c und Vergleichsbeispiele 1d, 1e

In den Beispielen 1 b-d wird bei gleichbleibendem Polymerisationsverfahren und Monomerzusammensetzung die Menge der zugegeben Stärke variiert. In Beispiel 1b werden 75 g, Maltodextrinlösung zugegeben in Beispiel 1c werden 50 g und in Beispiel 1d wird keine Maltodextrinlösung zugegeben, dieses Beispiel dient als nicht erfindungsgemäße Referenz. In Beispiel 1e wird zu der Dispersion aus Beispiel 1d 100 g einer 50%igen Maltodextrinlösung nach der Polymerisation und nach Abkühlen zugegeben und gerührt.

### Beispieldispersionen 2a und 2b

In den Beispielen 2a und b wird die Monomerzusammensetzung variiert. Die Maltodextrinmenge und der Polymerisationsverlauf entspricht Beispiel 1a.

### Monomerzulauf 2a:

200 g Wasser
22,22 g Dowfax® 2A1 (45%ig in Wasser)
5 g Acrylsäure
250 g n-Butylacrylat
245 g 2-Ethylhexylacrylat

### Monomerzulauf 2b:

200 g Wasser
22,22 g Dowfax® 2A1 (45%ig in Wasser)
5 g Acrylsäure
410 g n-Butylacrylat
85 g tert.-Butylacrylat

### Beispieldispersionen 3a und 3b

In den Beispielen 3a und b wird die Art der zugegebenen Stärke variiert. In 3a wird anstatt des Maltodextrins eine deutlich stärker abgebaute Stärke (C-Star-Sweet 01403, als 50%ige Lösung) eingesetzt, im Beispiel 3b wird das Maltodextrin von Roquette (Roquette 1967, als 50%ige Lösung) verwendet. In beiden Fällen ist die Monomerzusammensetzung sowie Stärkemenge analog zu Beispiel 1a.

### Beispieldispersion 4a

In Beispiel 4 a wird anstatt Dowfax® 2A1 der Emulgator Disponil® LDBS 20 in gleicher Menge eingesetzt. Die Zusammensetzung und Polymerisationsbedingung ist analog zu Beispiel 1a.

In der folgenden Tabelle sind die charakteristischen Werte der Beispieldispersionen beschrieben.

**Tabelle 1: Nassmusterwerte der Dispersionen aus den Beispielen 1-4.**

| Beispiel Nr. | FG [%] | pH-Wert | LD | Tg (berechnet) |
|---|---|---|---|---|
| 1a | 49,3 | 6,5 | 72 | -42°C |
| 1b | 51,8 | 5,1 | 73 | -42°C |
| 1c | 49,6 | 5,1 | 53 | -42°C |
| 1d Vergleich | 49,9 | 4,7 | 72 | -42°C |
| 2a | 50,2 | 4,4 | 70 | -50°C |
| 2b | 50,6 | 4,8 | 72 | -30°C |
| 3a | 49,6 | 3,9 | 74 | -42°C |
| 3b | 49,4 | 4,1 | 74 | -42°C |
| 4a | 50,4 | 4,9 | 73 | -42°C |

### Anwendungstechnische Prüfung

### Herstellung der Schutzfolie

Die erhaltenen Polymerdispersionen wurden hinsichtlich ihrer Eignung als Haftklebstoff für Schutzfolienanwendungen untersucht. Es werden unformulierte sowie mit Vernetzern formulierte Klebstoffe getestet. Dazu werden jeweils 100 g der Polymerdispersion unter Rühren mit der in den entsprechenden Tabellen angegebenen Menge Vernetzer tropfenweise versetzt und durch fünfminütiges Weiterrühren homogenisiert. Innerhalb von höchsten 2 Stunden werden die so erhaltenen Klebstoffe mit einem Balkenrakel direkt auf Korona-vorbehandelte Polyethylen-Folie (Foliendicke 50 µm) beschichtet, bei 90°C 3 min im Umluftofen getrocknet, anschließend mit silikonisiertem Papier abgedeckt und bis zur Anwendungsprüfung mindestens 16 Stunden, bei vernetzten Klebstoffen 7 Tage bei Normklima (23°C, 50% relative Luftfeuchte) gelagert. Die Prüfmuster weisen jeweils ein Klebstoff-Auftragsgewicht von (10 +/-1) g/m² auf. Für Untersuchungen der Wasseraufnahme und des Weißanlaufverhaltens werden die Klebstoffe auf PET-Folie (Hostaphan BN50) mit einem Klebstoff-Auftragsgewicht von (15 +/-1) g/m² aufgetragen, sonstige Bedingungen der Probenvorbereitung sind gleich.

### Prüfung zur Eignung als Schutzfolienklebstoff

### Wasserbeständigkeit

### a)Wasseraufnahme

Aus wie oben beschrieben mit Klebstoff beschichteten PET-Folienmustern werden mit dem Kreisschneider Stücke mit 100 cm² Fläche ausgeschnitten, das Silikonpapier entfernt und auf der Analysewaage gewogen. Mit Kenntnis des Klebstoff-Auftragsgewichts von (15 +/-1) g/m² wird die Klebstoffgesamtmenge im trockenen Zustand berechnet. In einer flachen Wanne wird zunächst Leitungswasser 24 Stunden bei Raumtemperatur temperiert. Anschließend werden die beschichteten PET-Folienstücke mit der Klebstoffseite nach oben 24 Stunden bei Raumtemperatur im Wasser gelagert; durch Beschweren mit kleinen Messingstückchen wird ein Aufschwimmen verhindert. Dann werden die Muster entnommen, anhaftende Wassertropfen umgehend mit einem Baumwolltuch abgetupft und die Folienscheibe mit der Klebstoffseite zusammengefaltet um ein weiteres Austrocknen zu verhindern. Erneut werden die Muster auf der Analysewaage gewogen. Die ermittelte Massenzunahme wird als Wasseraufnahme des Klebstoffs interpretiert und in prozentuale Relation zur ursprünglichen Klebstoffmasse gesetzt.

**Tabelle 2: Wasseraufnahme der Polymerfilme nach Lagerung in Wasser für 24 Stunden.**

| Beispiel.-Nr. | Monomerzusammensetzung [Gewichtsteile] | Stärkemenge, [Gewichtsteile], Typ | Vernetzermenge [Gewichtsteile], Typ | Wasseraufnahme [%] |
|---|---|---|---|---|
| 1a | 99 nBA, 1AS | 10, C Plus | 0 | 1,7 |
| 1a | 99 nBA, 1AS | 10, C Plus | 1,5 (Basonat®) | 0,1 |
| 1b | 99 nBA, 1AS | 7,5, C Plus | 0 | 17,6 |
| 1b | 99 nBA, 1AS | 7,5, C Plus | 1,5 (Basonat®) | 1,1 |
| 1c | 99 nBA, 1AS | 5, C Plus | 0 | 28,0 |
| 1c | 99 nBA, 1AS | 5, C Plus | 1,5 (Basonat®) | 1,1 |
| 1d Vergleich | 99 nBA, 1AS | 0 | 0 | 31,2 |
| 1d Vergleich | 99 nBA, 1AS | 0 | 1,5 (Basonat®) | 19,6 |
| 1e Vergleich | 99 nBA, 1AS | 10*, C Plus | 0 | 3,1 |
| 1e Vergleich | 99 nBA, 1AS | 10*, C Plus | 1,5 (Basonat®) | 20,0 |
| 2a | 49 EHA, 50 nBA, 1 AS | 10, C Plus | 0 | 19,2 |
| 2a | 49 EHA, 50 nBA, 1 AS | 10, C Plus | 1,5 (Basonat®) | 0,5 |
| 2b | 17 tBA, 82 nBA, 1 AS | 10, C Plus | 0 | 7,4 |
| 2b | 17 tBA, 82 nBA, 1 AS | 10, C Plus | 1,5 (Basonat®) | 0,4 |
| 3a | 99 nBA, 1AS | 10, C Sweet | 0 | 8,6 |
| 3a | 99 nBA, 1AS | 10, C Sweet | 2,0 (Basonat®) | 0,5 |
| 3b | 99 nBA, 1AS | 10, Roquette | 0 | 10,6 |
| 3b | 99 nBA, 1AS | 10, Roquette | 2,0 (Basonat®) | 0,6 |

### b) Weißanlaufverhalten

Mit (15 +/-1) g/m² Klebstoff beschichtete PET-Folienstreifen werden bei Raumtemperatur in Leitungswasser gelagert und das eventuell auftretende Weißanlaufen des Klebstoff nach definierten Intervallen gemäß Tabelle 3 visuell qualitativ beurteilt. Dabei bedeutet Note 0 = keine Trübung, 1 = sehr schwache Trübung, 2 = stärkere Trübung, 3 = starke Trübung und 4 = sehr starke Trübung.

**Tabelle 3: Weißanlaufen der Polymerfilme nach Lagerung in Wasser zu unterschiedlichen Zeiten, bei variierender Stärke- und Vernetzermenge**

| Dispersion Beispiel-Nr. | Vernetzermenge, [pphm], Typ | Verhältnis Stärke:Vernetzer | Weißanlaufen, Noten 0-4 nach | | |
|---|---|---|---|---|---|
| | | | 10 min | 1 h | 24 h |
| 1a | 0 | 10:0 | 4 | 4 | 4 |
| 1a | 1 (Basonat®) | 10:1 | 1 | 1 | 1 |
| 1a | 2 (Basonat®) | 5:1 | 0 | 0 | 0 |
| 1a | 3 (Basonat®) | 3,3:1 | 4 | 4 | 4 |
| 1a | 0,3 (Emuldur®) | 33:1 | 3 | 3 | 3 |
| 1a | 0,6 (Emuldur®) | 17:1 | 4 | 4 | 2 |
| 1a | 0,9 (Emuldur®) | 11:1 | 0 | 0 | 0 |
| 1c | 0 | 10:0 | 4 | 4 | 4 |
| 1c | 2 (Basonat®) | 2,5:1 | 4 | 4 | 4 |
| 1d Vergleich | 0 | 10:0 | 4 | 4 | 4 |
| 1d Vergleich | 2 (Basonat®) | 5:1 | 4 | 4 | 4 |
| 1e Vergleich | 0 | 10:0 | 4 | 4 | 4 |
| 1e Vergleich | 1,5 (Basonat®) | 6,7:1 | 4 | 4 | 4 |
| 3a | 0 | 10:0 | 4 | 4 | 4 |
| 3a | 2 (Basonat®) | 5:1 | 1 | 0 | 0 |
| 3b | 0 | 10:0 | 4 | 4 | 4 |
| 3b | 2 (Basonat®) | 5:1 | 2 | 1 | 1 |

### c) Verankerung nach Wasserlagerung

Mit (10 +/-1) g/m² Klebstoff beschichtete PE-Streifen (Muster wie zur Ermittlung des Klebeprofils, siehe unten) werden bei Raumtemperatur 24 Stunden in Leitungswasser gelagert. Kann anschließend der Klebstoff nicht oder nur sehr schwer mit dem Daumen von der PE-Folie abgerieben werden, so wird die Verankerung als sehr gut bzw. gut beurteilt. Lässt sich der Klebstoff hingegen mit nur wenig Aufwand abreiben, so wird die Verankerung als schlecht beurteilt.

**Tabelle 4: Verankerung der Klebstofffilme nach 24 h Wasserlagerung.**

| Nr. | Vernetzermenge,[%], Typ | Verankerung auf PE^{b} |
|---|---|---|
| 1a | 0 | Sehr schlecht |
| 1a | 1,5 (Basonat® HW 100) | Sehr gut |
| 1d Vergleich | 0 | Sehr schlecht |
| 1d Vergleich | 1,5 (Basonat® HW 100) | Schlecht |
| 3a | 0 | Schlecht |
| 3a | 1,5 (Basonat® HW 100) | Sehr gut |
| 3b | 0 | Sehr schlecht |
| 3b | 1,5 (Basonat® HW 100) | Sehr gut |

### Klebeprofil

### a)Quickstick

Bei der Bestimmung des Quickstick (Oberflächenklebrigkeit, auch Loop Tack genannt) wird die Kraft bestimmt, die ein auf ein Trägermaterial aufgebrachter Klebstoff durch Verklebung ohne Druck auf ein Substrat bei einer definierten Abzugsgeschwindigkeit dem Abziehen vom Substrat (Stahl) entgegensetzt. Aus dem wie oben beschrieben mit Klebstoff beschichteten Träger wird ein Prüfstreifen in 25 mm Breite und 250 mm Länge geschnitten und mindestens 16 Stunden, bei vernetzten Klebstoffen 7 Tage bei Normklima (23°C, 50% relative Luftfeuchte) gelagert. Die beiden Enden des Prüfstreifens werden auf ca. 1 cm Länge mit der Klebeseite nach innen umgeklappt. Aus dem Klebstreifen wird eine Schlaufe mit der Klebseite nach außen gebildet, die beiden Enden zusammengefasst und in die obere Klemme einer Zugprüfmaschine eingespannt. In die untere Klemme wird die Prüfsubstrathalterung eingespannt und das Prüfsubstrat eingelegt. Die Klebestreifenschlaufe wird durch die Zugprüfmaschine mit einer Geschwindigkeit von 300 mm/Minute nach unten gefahren, sodass die Klebseite des Prüfstreifens mit dem Substrat ohne zusätzlichen Druck verklebt. Die Zugprüfmaschine wird gestoppt und sofort wieder nach oben gefahren, wenn sich die Unterkante der oberen Klemme 40 mm über dem Substrat befindet. Die Angabe des Prüfergebnisses erfolgt in N/25 mm Breite. Es wird der höchste Wert der Anzeige (Fmax) als Maß der Oberflächenklebrigkeit abgelesen. Aus mindestens zwei Einzelergebnissen wird ein Mittelwert gebildet.

### b) Scherfestigkeit (Kohäsion)

Zur Bestimmung der Scherfestigkeit werden die Prüfstreifen mit einer verklebten Fläche von 25 x 25 mm auf Stahlblech geklebt, mit einer 1 kg schweren Rolle 1 mal angerollt und nach 10 Minuten hängend mit einem 1 kg Gewicht belastet. Die Scherfestigkeit (Kohäsion) wird bei Normklima (23°C; 50% relative Luftfeuchtigkeit) bestimmt. Das Maß für die Scherfestigkeit ist die Zeit in Stunden bis zum Abfallen des Gewichts; es wird jeweils der Durchschnitt aus mindestens 3 Messungen berechnet.

### c) Schälfestigkeit (Adhäsion)

Bei der Bestimmung der Schälfestigkeit (Adhäsion) wird jeweils ein 25 mm breiter Prüfstreifen auf einen Prüfkörper aus dem in den jeweiligen Tabellen gekennzeichnetem Material geklebt und mit einer 1 kg schweren Rolle 1-mal angerollt. Er wird dann mit einem Ende in die oberen Backen einer Zug-Dehnungs-Prüfapparatur eingespannt. Der Klebestreifen wird mit 300 mm/min unter einem 180° Winkel von der Prüffläche abgezogen d.h. der Klebestreifen wird umgebogen und parallel zum Prüfkörper abgezogen und der dazu benötigte Kraftaufwand gemessen. Das Maß für die Schälfestigkeit ist die Kraft in N/25 mm, die sich als Durchschnittswert aus mindestens zwei Messungen ergibt. Die Schälfestigkeit wird 1 Minute bzw. 24 Stunden nach der Verklebung bestimmt.

Die Testmethoden entsprechen im Wesentlichen den Finat-Testmethoden (FTM) Nr. 1, Nr. 8 und Nr. 9.

Erklärung des Bruchbilds: "A" entspricht einem Adhäsionsbruch zum Substrat, bei "F" ist ein geringfügiger filmischer Rückstand auf der Substratoberfläche erkennbar.

**Tabelle 5: Klebeprofile der Beispieldispersionen mit und ohne Stärke.**

| Nr. | Quickstick Stahl, [N/25mm] | Schälfestigkeit [N/25 mm]; Bruchbild | | | | Scherfestigkeit Stahl [h] |
|---|---|---|---|---|---|---|
| | | 1 min Stahl | 24 h Stahl | 1 min HDPE | 24 h HDPE | |
| 1a | 2,1 | 1,4; A | 2,6; A | 0,5; A | 2,0; A | >100 |
| 1a^{a} | 1,1 | 1,2; A | 2,1; A | 0,4; A | 0,6; A | >100 |
| 1d^{b} | 3,7 | 2,9; A | 5,1; F | 0,9; A | 1,3; A | >100 |
| 1d^{a,b} | 2,4 | 2,0; A | 4,0; F | 0,3; A | 0,4; A | >100 |
| 3a | 1,2 | 1,6; A | 3,8; F | 0,5; A | 1,2; A | >100 |
| 3a^{a} | 0,8 | 1,0; A | 2,2; F | 0,3; A | 0,4; A | >100 |
| 3b | 1,5 | 2,5; A | 3,7; F | 0,8; A | 0,9; A | >100 |
| 3b^{a} | 1,4 | 1,6; A | 2,1; F | 0,3; A | 0,4; A | >100 |
| 4a | 0,7 | 1,0; A | 3,5; A | 0,3; A | 0,4; A | >100 |
| 4a^{a} | 1,7 | 3,2; A | 4,7; A | 0,9; A | 1,2; A | >100 |

| | | | | | | |
|---|---|---|---|---|---|---|
| a) mit 1,5 % Basonat® HW 100 abgemischt. b) 1d ist eine nicht erfindungsgemäße Vergleichsdispersion | | | | | | |

## Patentansprüche

1. Haftklebende Schutzfolie, gebildet aus einer Polymerfolie, welche mit einer vernetzten Haftklebstoffzusammensetzung beschichtet ist,
wobei die Haftklebstoffzusammensetzung mindestens ein Haftklebstoffpolymer enthält, welches gebildet ist durch Emulsionspolymerisation aus
(i) mindestens 60 Gew.%, bezogen auf die Summe der Monomere, mindestens eines weichen Monomers, welches, wenn es als Homopolymer polymerisiert ist, eine Glasübergangstemperatur von weniger als 0°C aufweist,
(ii) 0,1 - 5 Gew.%, bezogen auf die Summe der Monomere, mindestens einer ethylenisch ungesättigten Säure oder mindestens eines ethylenisch ungesättigten Säureanhydrids,
(iii) optional weitere, von (i) und (ii) verschiedene Monomere,
wobei die Emulsionspolymerisation der Monomere in Gegenwart von mindestens einer verzuckerten Stärke erfolgt,
und wobei die Haftklebstoffzusammensetzung mindestens einen Vernetzer enthält, der ausgewählt ist aus Polyisocyanaten und Polyaziridinen,
und wobei die durch den Vernetzer bewirkte Vernetzungsreaktion beendet ist, ohne dass die haftklebende Schutzfolie auf ein Substrat aufgeklebt ist.

2. Schutzfolie nach Anspruch 1, **dadurch gekennzeichnet, dass** die Haftklebstoffzusammensetzung eine wässrige Dispersion mit darin dispergiertem Haftklebstoffpolymer ist, wobei die Zusammensetzung von 0,05 bis 10 Gew.-teile Vernetzer bezogen auf die Summe aus den Gewichtsanteilen der mindestens einen verzuckerten Stärke und des mindestens einen Haftklebstoffpolymer enthält.

3. Schutzfolie nach einem der vorhergehenden Ansprüche, **dadurch gekennzeichnet, dass** das mindestens eine weiche Monomer (i) ausgewählt ist aus n-Butylacrylat, Ethylacrylat und 2-Ethylhexylacrylat und Mischungen dieser Monomere.

4. Schutzfolie nach einem der vorhergehenden Ansprüche, **dadurch gekennzeichnet, dass** die mindestens eine ethylenisch ungesättigte Säure (ii) ausgewählt ist aus der Gruppe bestehend aus Acrylsäure und Methacrylsäure und Mischungen dieser Monomere.

5. Schutzfolie nach einem der vorhergehenden Ansprüche, **dadurch gekennzeichnet, dass** die weiteren Monomere in einer Menge von 0 bis 30 Gew.% eingesetzt werden und ausgewählt sind aus der Gruppe bestehend aus C1- bis C20-Alkylacrylaten, C1- bis C20-Alkylmeth-acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, Hydroxylgruppen enthaltenden Monomeren, (Meth)acrylamid, Phenyloxyethylglykolmono(meth)acrylat, Glycidyl(meth)acrylat, Aminoalkyl(meth)acrylaten, Diacetonacrylamid und Acetoacetoxyethylmethacrylat und Mischungen dieser Monomere.

6. Schutzfolie nach einem der vorhergehenden Ansprüche, **dadurch gekennzeichnet, dass** die verzuckerte Stärke eingesetzt wird in Mengen von 1 bis 50 Gewichtsteilen bezogen auf 100 Gewichtsteile Monomere des Haftklebstoffpolymers und dass die verzuckerte Stärke einen DE-Wert von 1 bis 25 aufweist.

7. Schutzfolie nach einem der vorhergehenden Ansprüche, **dadurch gekennzeichnet, dass** das Gewichtsverhältnis von verzuckerter Stärke zu Vernetzer in der Dispersion vorzugsweise von 1:2 bis 100:1, vorzugsweise von 3,5:1 bis 40:1 beträgt.

8. Schutzfolie nach einem der vorhergehenden Ansprüche, **dadurch gekennzeichnet, dass** die Vernetzer ausgewählt sind aus aliphatischen Diisocyanaten, cycloaliphatischen Diisocyanaten, aromatische Diisocyanaten, Isocyanuratgruppen aufweisenden Polyisocyanaten von aromatischen, aliphatischen und/oder cycloaliphatischen Diisocyanaten, Uretdiondiisocyanaten mit aromatisch, aliphatisch und/oder cycloaliphatisch gebundenen Isocyanatgruppen, Biuretgruppen aufweisenden Polyisocyanaten mit aromatisch oder aliphatisch gebundenen Isocyanatgruppen, Urethangruppen und/oder Allophanatgruppen aufweisenden Polyisocyanaten mit aromatisch, aliphatisch oder cycloaliphatisch gebundenen Isocyanatgruppen, Oxadiazintriongruppen enthaltenden Polyisocyanaten, Trimethylolpropan-tris-(beta-aziridi-no)-propionat, Neopentylglykoldi-(beta-aziridino)-propionat, Glycerin-tris-(beta-aziridino)-propio-nat, Pentaerythrit-tetra-(beta-aziridino)-propionat, 4,4'-Isopropylidendiphenoldi-(beta-aziridino)-propionat, 4,4'-Methylendiphenoldi-(beta-aziridino)-propionat, 1,6-Hexamethylen-di-(N,N-ethylenharnstoff), 4,4'-Methylen-bis-(phenyl-N,N-ethylenharnstoff), 1,3,5-Tris-(omega-hexamethylen-N,N-ethylenharnstoff)-biuret und Gemische davon.

9. Schutzfolie nach einem der vorhergehenden Ansprüche, **dadurch gekennzeichnet, dass** die Glasübergangstemperatur des unvernetzten Klebstoffpolymers von -60 bis 0 °C beträgt.

10. Schutzfolie nach einem der vorhergehenden Ansprüche, **dadurch gekennzeichnet, dass** die Haftklebstoffzusammensetzung mindestens ein Haftklebstoffpolymer enthält, welches gebildet ist durch Emulsionspolymerisation aus
(i) 60 bis 99,9 Gew.%, bezogen auf die Summe der Monomere, mindestens eines weichen Monomers, ausgewählt aus der Gruppe bestehend aus n-Butylacrylat, Ethylacrylat und 2-Ethylhexylacrylat und Mischungen dieser Monomere,
(ii) 0,1 - 5 Gew.%, bezogen auf die Summe der Monomere, mindestens eines Monomers ausgewählt aus der Gruppe bestehend aus Acrylsäure, Methacrylsäure und Mischungen dieser Monomere,
(iii) 0 bis 30 Gew.% von (i) und (ii) verschiedene Monomere, ausgewählt aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, Hydroxylgruppen enthaltende Monomeren, (Meth)acrylamid, Phenyloxyethylglykolmono(meth)acrylat, Glycidyl(meth)acrylat, Aminoalkyl(meth)acrylaten, Diacetonacrylamid und Acetoacetoxyethylmethacrylat und Mischungen dieser Monomere,
wobei die Emulsionspolymerisation der Monomere in Gegenwart von mindestens einer verzuckerten Stärke in einer Menge von 0,1 bis 50 Gewichtsteilen bezogen auf 100 Gewichtsteile Monomere des mindestens einen Haftklebstoffpolymers erfolgt,
und wobei die Haftklebstoffzusammensetzung mindestens einen Vernetzer enthält, der ausgewählt ist aus Polyisocyanaten und Polyaziridinen, wobei das Gewichtsverhältnis von verzuckerter Stärke zu Vernetzer in der Dispersion von 1:2 bis 100:1, vorzugsweise von 3,5:1 bis 40:1 beträgt.

11. Verfahren zur Herstellung von Schutzfolien, wobei eine Haftklebstoffzusammensetzung zur Verfügung gestellt wird, wobei die Haftklebstoffzusammensetzung mindestens ein Haftklebstoffpolymer enthält, welches gebildet ist durch Emulsionspolymerisation aus
(i) mindestens 60 Gew.%, bezogen auf die Summe der Monomere, mindestens eines weichen Monomers, welches, wenn es als Homopolymer polymerisiert ist, eine Glasübergangstemperatur von weniger als 0°C aufweist,
(ii) 0,1 - 5 Gew.%, bezogen auf die Summe der Monomere, mindestens einer ethylenisch ungesättigten Säure oder mindestens eines ethylenisch ungesättigten Säureanhydrids,
(iii) optional weitere, von (i) und (ii) verschiedene Monomere,
wobei die Emulsionspolymerisation der Monomere in Gegenwart von mindestens einer verzuckerten Stärke erfolgt,
und wobei die Haftklebstoffzusammensetzung mindestens einen Vernetzer enthält, der ausgewählt ist aus Polyisocyanaten und Polyaziridinen,
wobei die Schutzfolie eine Polymerfolie ist, die mit der Haftklebstoffzusammensetzung beschichtet wird und wobei die durch den Vernetzer bewirkte Vernetzungsreaktion beendet ist, ohne dass die haftklebende Schutzfolie auf ein Substrat aufgeklebt ist.

12. Haftklebstoffzusammensetzung verwendbar in dem Verfahren gemäß Anspruch 11 in Form einer wässrigen Polymerdispersion, enthaltend mindestens ein dispergiertes Haftklebstoffpolymer, welches gebildet ist durch Emulsionspolymerisation aus
(i) mindestens 60 Gew.%, bezogen auf die Summe der Monomere, mindestens eines weichen Monomers, welches, wenn es als Homopolymer polymerisiert ist, eine Glasübergangstemperatur von weniger als 0°C aufweist,
(ii) 0,1 - 5 Gew.%, bezogen auf die Summe der Monomere, mindestens einer ethylenisch ungesättigten Säure oder mindestens eines ethylenisch ungesättigten Säureanhydrids,
(iii) optional weitere, von (i) und (ii) verschiedene Monomere,
wobei die Emulsionspolymerisation der Monomere in Gegenwart von mindestens einer verzuckerten Stärke erfolgt,
wobei die Haftklebstoffzusammensetzung mindestens einen Vernetzer enthält, der ausgewählt ist aus Polyisocyanaten und Polyaziridinen,
und wobei das Gewichtsverhältnis von Stärke zu Vernetzer in der Dispersion von 1:2 bis 100:1, vorzugsweise von 3,5:1 bis 40:1 beträgt.

## Claims

1. A pressure-sensitively adhesive protective film formed from a polymer film coated with a crosslinked pressure-sensitive adhesive composition,
the pressure-sensitive adhesive composition comprising at least one pressure-sensitive adhesive polymer formed by emulsion polymerization from
(i) at least 60 wt%, based on the sum of the monomers, of at least one soft monomer which when polymerized as a homopolymer has a glass transition temperature of less than 0°C,
(ii) 0.1 - 5 wt%, based on the sum of the monomers, of at least one ethylenically unsaturated acid or at least one ethylenically unsaturated acid anhydride,
(iii) optionally further monomers different from (i) and (ii),
the emulsion polymerization of the monomers taking place in the presence of at least one saccharified starch,
and the pressure-sensitive adhesive composition comprising at least one crosslinker selected from polyisocyanates and polyaziridines,
and the crosslinking reaction brought about by the crosslinker being at an end without the pressure-sensitively adhesive protective film being adhered to a substrate.

2. The protective film according to claim 1, wherein the pressure-sensitive adhesive composition is an aqueous dispersion with pressure-sensitive adhesive polymer dispersed therein, the composition comprising from 0.05 to 10 parts by weight of crosslinker, based on the sum of the weight fractions of the at least one saccharified starch and of the at least one pressure-sensitive adhesive polymer.

3. The protective film according to either of the preceding claims, wherein the at least one soft monomer (i) is selected from n-butyl acrylate, ethyl acrylate, and 2-ethylhexyl acrylate, and mixtures of these monomers.

4. The protective film according to any of the preceding claims, wherein the at least one ethylenically unsaturated acid (ii) is selected from the group consisting of acrylic acid and methacrylic acid and mixtures of these monomers.

5. The protective film according to any of the preceding claims, wherein the further monomers are used in an amount of 0 to 30 wt% and are selected from the group consisting of C1 to C20 alkyl acrylates, C1 to C20 alkyl methacrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, monomers comprising hydroxyl groups, (meth)acrylamide, phenyloxyethyl glycol mono(meth)acrylate, glycidyl (meth)acrylate, aminoalkyl (meth)acrylates, diacetoneacrylamide, and acetoacetoxyethyl methacrylate, and mixtures of these monomers.

6. The protective film according to any of the preceding claims, wherein the saccharified starch is used in amounts of 1 to 50 parts by weight, based on 100 parts by weight of monomers of the pressure-sensitive adhesive polymer, and wherein the saccharified starch has a DE of 1 to 25.

7. The protective film according to any of the preceding claims, wherein the weight ratio of saccharified starch to crosslinker in the dispersion is preferably from 1:2 to 100:1, preferably from 3.5:1 to 40:1.

8. The protective film according to any of the preceding claims, wherein the crosslinkers are selected from aliphatic diisocyanates, cycloaliphatic diisocyanates, aromatic diisocyanates, polyisocyanates containing isocyanurate groups and derived from aromatic, aliphatic and/or cycloaliphatic diisocyanates, uretdione diisocyanates having aromatically, aliphatically and/or cycloaliphatically bonded isocyanate groups, polyisocyanates containing biuret groups and having aromatically or aliphatically bonded isocyanate groups, polyisocyanates containing urethane groups and/or allophanate groups and having aromatically, aliphatically or cycloaliphatically bonded isocyanate groups, polyisocyanates comprising oxadiazinetrione groups, trimethylolpropane tris(beta-aziridino)propionate, neopentyl glycol di(beta-aziridino)propionate, glycerol tris(beta-aziridino)propionate, pentaerythritol tetra(beta-aziridino)propionate, 4,4'-isopropylidenediphenol di(beta-aziridino)propionate, 4,4'-methylenediphenol di(beta-aziridino)propionate, 1,6-hexamethylene di(N,N-ethyleneurea), 4,4'-methylenebis(phenyl-N,N-ethyleneurea), 1,3,5-tris(omega-hexamethylene-N,N-ethyleneurea) biuret, and mixtures thereof.

9. The protective film according to any of the preceding claims, wherein the glass transition temperature of the noncrosslinked adhesive polymer is from -60 to 0°C.

10. The protective film according to any of the preceding claims, wherein the pressure-sensitive adhesive composition comprises at least one pressure-sensitive adhesive polymer formed by emulsion polymerization from
(i) 60 to 99.9 wt%, based on the sum of the monomers, of at least one soft monomer selected from the group consisting of n-butyl acrylate, ethyl acrylate, and 2-ethylhexyl acrylate, and mixtures of these monomers,
(ii) 0.1 - 5 wt%, based on the sum of the monomers, of at least one monomer selected from the group consisting of acrylic acid, methacrylic acid and mixtures of these monomers,
(iii) 0 to 30 wt% of monomers different from (i) and (ii), selected from the group consisting of C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, monomers comprising hydroxyl groups, (meth)acrylamide, phenyloxyethyl glycol mono(meth)acrylate, glycidyl (meth)acrylate, aminoalkyl (meth)acrylates, diacetoneacrylamide, and acetoacetoxyethyl methacrylate, and mixtures of these monomers,
the emulsion polymerization of the monomers taking place in the presence of at least one saccharified starch in an amount of 0.1 to 50 parts by weight, based on 100 parts by weight of monomers of the at least one pressure-sensitive adhesive polymer,
and the pressure-sensitive adhesive composition comprising at least one crosslinker selected from polyisocyanates and polyaziridines, the weight ratio of saccharified starch to crosslinker in the dispersion being from 1:2 to 100:1, preferably from 3.5:1 to 40:1.

11. A process for producing protective films, a pressure-sensitive adhesive composition being provided, the pressure-sensitive adhesive composition comprising at least one pressure-sensitive adhesive polymer formed by emulsion polymerization from
(i) at least 60 wt%, based on the sum of the monomers, of at least one soft monomer which when polymerized as a homopolymer has a glass transition temperature of less than 0°C,
(ii) 0.1 - 5 wt%, based on the sum of the monomers, of at least one ethylenically unsaturated acid or at least one ethylenically unsaturated acid anhydride,
(iii) optionally further monomers different from (i) and (ii),
the emulsion polymerization of the monomers taking place in the presence of at least one saccharified starch,
and the pressure-sensitive adhesive composition comprising at least one crosslinker selected from polyisocyanates and polyaziridines,
the protective film being a polymer film which is coated with the pressure-sensitive adhesive composition, and the crosslinking reaction brought about by the crosslinker being at an end without the pressure-sensitively adhesive protective film being adhered to a substrate.

12. A pressure-sensitive adhesive composition usable in the process according to claim 11, in the form of an aqueous polymer dispersion comprising at least one dispersed pressure-sensitive adhesive polymer formed by emulsion polymerization from
(i) at least 60 wt%, based on the sum of the monomers, of at least one soft monomer which when polymerized as a homopolymer has a glass transition temperature of less than 0°C,
(ii) 0.1 - 5 wt%, based on the sum of the monomers, of at least one ethylenically unsaturated acid or at least one ethylenically unsaturated acid anhydride,
(iii) optionally further monomers different from (i) and (ii),
the emulsion polymerization of the monomers taking place in the presence of at least one saccharified starch,
the pressure-sensitive adhesive composition comprising at least one crosslinker selected from polyisocyanates and polyaziridines,
and the weight ratio of starch to crosslinker in the dispersion being from 1:2 to 100:1, preferably from 3.5:1 to 40:1.

## Revendications

1. Feuille protectrice autoadhésive, formée à partir d'une feuille de polymère, qui est revêtue avec une composition autoadhésive réticulée,
la composition autoadhésive contenant au moins un polymère autoadhésif, qui est formé par polymérisation en émulsion
(i) d'au moins 60 % en poids, par rapport à la somme des monomères, d'au moins un monomère souple, qui, lorsqu'il est polymérisé en tant qu'homopolymère, présente une température de transition vitreuse inférieure à 0 °C,
(ii) de 0,1 à 5 % en poids, par rapport à la somme des monomères, d'au moins un acide éthyléniquement insaturé ou d'au moins un anhydride d'acide éthyléniquement insaturé,
(iii) éventuellement d'autres monomères différents de (i) et (ii),
la polymérisation en émulsion des monomères étant réalisée en présence d'au moins un amidon saccharifié,
et la composition autoadhésive contenant au moins un agent de réticulation qui est choisi parmi des polyisocyanates et des polyaziridines,
et la réaction de réticulation induite par l'agent de réticulation étant terminée sans que la feuille protectrice autoadhésive ne soit collée sur un substrat.

2. Feuille protectrice selon la revendication 1, **caractérisée en ce que** la composition autoadhésive est une dispersion aqueuse comportant le polymère autoadhésif dispersé dans celle-ci, la composition contenant de 0,05 à 10 parties en poids d'agent de réticulation par rapport à la somme des parties en poids de l'au moins un amidon saccharifié et de l'au moins un polymère autoadhésif.

3. Feuille protectrice selon l'une quelconque des revendications précédentes, **caractérisée en ce que** l'au moins un monomère souple (i) est choisi parmi l'acrylate de n-butyle, l'acrylate d'éthyle et l'acrylate de 2-éthylhexyle et des mélanges de ces monomères.

4. Feuille protectrice selon l'une quelconque des revendications précédentes, **caractérisée en ce que** l'au moins un acide éthyléniquement insaturé (ii) est choisi dans le groupe constitué par l'acide acrylique et l'acide méthacrylique et des mélanges de ces monomères.

5. Feuille protectrice selon l'une quelconque des revendications précédentes, **caractérisée en ce que** les monomères supplémentaires sont utilisés en une quantité de 0 à 30 % en poids et sont choisis dans le groupe constitué par des acrylates de C₁₋₂₀-alkyle, des méthacrylates de C₁₋₂₀-alkyle, des esters de vinyle d'acides carboxyliques contenant jusqu'à 20 atomes de C, des composés vinylaromatiques comportant jusqu'à 20 atomes de C, des nitriles éthyléniquement insaturés, des halogénures de vinyle, des éthers de vinyle d'alcools contenant de 1 à 10 atomes de C, et des hydrocarbures aliphatiques comportant 2 à 8 atomes de C et une ou deux doubles liaisons, des monomères contenant des groupes hydroxyle, un (méth)acrylamide, un mono(méth)acrylate de phényloxyéthylglycol, un (méth)acrylate de glycidyle, des (méth)acrylates d'aminoalkyle, l'acrylamide de diacétone et le (méth)acrylate d'acétoacétoxyéthyle et des mélanges de ces monomères.

6. Feuille protectrice selon l'une quelconque des revendications précédentes, **caractérisée en ce que** l'amidon saccharifié est utilisé en des quantités de 1 à 50 parties en poids par rapport à 100 parties en poids des monomères du polymère autoadhésif et **en ce que** l'amidon saccharifié présente une valeur DE de 1 à 25.

7. Feuille protectrice selon l'une quelconque des revendications précédentes, **caractérisée en ce que** le rapport en poids d'amidon saccharifié sur l'agent de réticulation dans la dispersion est de préférence de 1 : 2 à 100 : 1, de préférence de 3,5 : 1 à 40 : 1.

8. Feuille protectrice selon l'une quelconque des revendications précédentes, **caractérisée en ce que** les agents de réticulation sont choisis parmi des diisocyanates aliphatiques, des diisocyanates cycloaliphatiques, des diisocyanates aromatiques, des polyisocyanates, présentant des groupes isocyanurate, de diisocyanates aromatiques, aliphatiques et/ou cycloaliphatiques, des diisocyanates d'uretdione comportant des groupes isocyanate liés de manière aromatique, aliphatique et/ou cycloaliphatique, des polyisocyanates, présentant des groupes biuret, comportant des groupes isocyanate liés de manière aromatique ou aliphatique, des polyisocyanates, présentant des groupes uréthane et/ou des groupes allophanate, comportant des groupes isocyanate liés de manière aromatique, aliphatique ou cycloaliphatique, des polyisocyanates contenant des groupes oxadiazinetrione, le tris-(bêta-aziridino)-propionate de triméthylolpropane, le di-(bêta-aziridino)-propionate de néopentylglycol, le tris-(bêta-aziridino)-propionate de glycérine, le tétra-(bêta-aziridino)-propionate de pentaérythritol, le di-(bêta-aziridino)-propionate de 4,4'-isopropylidènediphénol, le di-(bêta-aziridino)-propionate de 4,4'-méthylènediphénol, la 1,6-hexaméthylène-di-(N,N-éthylèneurée), la 4,4'-méthylène-bis-(phényl-N,N-éthylèneurée), le 1,3,5-tris-(oméga-hexaméthylène-N,N-éthylèneurée)-biuret et des mélanges correspondants.

9. Feuille protectrice selon l'une quelconque des revendications précédentes, **caractérisée en ce que** la température de transition vitreuse du polymère adhésif non réticulé est de -60 à 0 °C.

10. Feuille protectrice selon l'une quelconque des revendications précédentes, **caractérisée en ce que** la composition autoadhésive contient au moins un polymère autoadhésif qui est formé par polymérisation en émulsion
(i) de 60 à 99,9% en poids, par rapport à la somme des monomères, d'au moins un monomère souple, choisi dans le groupe constitué par l'acrylate de n-butyle, l'acrylate d'éthyle et l'acrylate de 2-éthylhexyle et des mélanges de ces monomères,
(ii) de 0,1 à 5 % en poids, par rapport à la somme des monomères, d'au moins un monomère choisi dans le groupe constitué par l'acide acrylique et l'acide méthacrylique et des mélanges de ces monomères,
(iii) de 0 à 30 % en poids de monomères différents de (i) et (ii), choisis dans le groupe constitué par des (méth)acrylates de C₁₋₂₀-alkyle, des esters de vinyle d'acides carboxyliques contenant jusqu'à 20 atomes de C, des composés vinylaromatiques comportant jusqu'à 20 atomes de C, des nitriles éthyléniquement insaturés, des halogénures de vinyle, des éthers de vinyle d'alcools contenant de 1 à 10 atomes de C, et des hydrocarbures aliphatiques comportant 2 à 8 atomes de C et une ou deux doubles liaisons, des monomères contenant des groupes hydroxyle, un (méth)acrylamide, un mono(méth)acrylate de phényloxyéthylglycol, un (méth)acrylate de glycidyle, des (méth)acrylates d'aminoalkyle, l'acrylamide de diacétone et le (méth)acrylate d'acétoacétoxyéthyle et des mélanges de ces monomères,
la polymérisation en émulsion des monomères étant réalisée en présence d'au moins un amidon saccharifié en une quantité de 0,1 à 50 parties en poids par rapport à 100 parties en poids des monomères de l'au moins un polymère autoadhésif, et la composition autoadhésive contenant au moins un agent de réticulation qui est choisi parmi des polyisocyanates et des polyaziridines, le rapport en poids d'amidon saccharifié sur l'agent de réticulation dans la dispersion étant de 1 : 2 à 100 : 1, de préférence de 3,5 : 1 à 40 : 1.

11. Procédé pour la préparation de feuilles protectrices, une composition autoadhésive étant mise à disposition, la composition autoadhésive contenant au moins un polymère autoadhésif qui est formé par polymérisation en émulsion
(i) d'au moins 60 % en poids, par rapport à la somme des monomères, d'au moins un monomère souple, qui, lorsqu'il est polymérisé en tant qu'homopolymère, présente une température de transition vitreuse inférieure à 0 °C,
(ii) de 0,1 à 5 % en poids, par rapport à la somme des monomères, d'au moins un acide éthyléniquement insaturé ou d'au moins un anhydride d'acide éthyléniquement insaturé,
(iii) éventuellement d'autres monomères différents de (i) et (ii),
la polymérisation en émulsion des monomères étant réalisée en présence d'au moins un amidon saccharifié,
et la composition autoadhésive contenant au moins un agent de réticulation qui est choisi parmi des polyisocyanates et des polyaziridines,
et la feuille protectrice étant une feuille de polymère qui est revêtue avec la composition autoadhésive et la réaction de réticulation induite par l'agent de réticulation étant terminée sans que la feuille protectrice autoadhésive ne soit collée sur un substrat.

12. Composition autoadhésive utilisable dans le procédé selon la revendication 11 sous forme d'une dispersion aqueuse de polymère, contenant au moins un polymère autoadhésif dispersé qui est formé par polymérisation en émulsion
(i) d'au moins 60 % en poids, par rapport à la somme des monomères, d'au moins un monomère souple, qui, lorsqu'il est polymérisé en tant qu'homopolymère, présente une température de transition vitreuse inférieure à 0 °C,
(ii) de 0,1 à 5 % en poids, par rapport à la somme des monomères, d'au moins un acide éthyléniquement insaturé ou d'au moins un anhydride d'acide éthyléniquement insaturé,
(iii) éventuellement d'autres monomères différents de (i) et (ii),
la polymérisation en émulsion des monomères étant réalisée en présence d'au moins un amidon saccharifié,
la composition autoadhésive contenant au moins un agent de réticulation qui est choisi parmi des polyisocyanates et des polyaziridines,
et le rapport en poids d'amidon sur l'agent de réticulation dans la dispersion étant de 1 : 2 à 100 : 1, de préférence de 3,5 : 1 à 40 : 1.
